# EUROPEAN PATENT APPLICATION

(11) **EP 1 711 020 A2**
(43) Date of publication of application: **11.10.2006**
(21) Application number: 06075448.8
(22) Date of filing: 28.02.2006
(51) Int. Cl.: H04N 9/31, H04N 5/74, G02F 1/00

(54) **Light valve**

(30) Priority: 04.04.2005 US 97272
(71) Applicant: Barco, naamloze vennootschap., 8500 Kortrijk (BE)
(72) Inventor: Gerets, Peter, 8800 - Roeselare (BE); Coulier, Nico, 9870 - Zulte (BE); Karlsson, Mats, 8500 - Kortrijk (BE)
(74) Representative: Donné, Eddy

(57) **Abstract**

A light valve meant to be used in a lighting device, comprising an array of light processing elements that are arranged in an outline substantially corresponding to the overall contour of an image to be built.

## Description

### 1. Field of the Invention

The present invention relates to a light valve, in particular a reflective or transmissive light valve designed to be used in a lighting device, such as for example, a so called gobo.

### 2. Discussion of the Related Art

It is known to use light valves in lighting devices such as a gobo, which is a lighting device that is designed to be used for on-stage light shows for projecting images, moving all over said stage.

Such a gobo generally consists of a light source that generates a light beam, a light valve for processing said light beam to build an image, and a lens, through which the processed light beam is projected on a screen, wall or the like.

The known light valves used in the above described lighting devices consist of a rectangular array of light processing elements such as, among others, mirrors or liquid crystals.

Each of said elements hereby corresponds to a pixel of the projected image and can individually be shifted between a position wherein the concerning element directs a part of the light beam to the lens, such that the corresponding pixel on the screen or such is lit and a position wherein said element directs the light beam away from said lens, whereby the corresponding pixel on the screen or such remains unlit.

A disadvantage of the known rectangular light valves is that when only a circular area of the array of light processing elements is lit, it is observed that the image built on the screen is surrounded by a slightly illuminated zone that diminishes the contrast of the projected image.

Since in a lighting device the projected image is generally circular, it is known to suppress said illumination surrounding the projected image by providing additional lenses with an adjustable aperture.

It is clear however that such additional lenses increase the cost of the concerning lighting device.

Moreover said additional lenses result in bigger and heavier lighting devices that are more difficult to handle.

### SUMMARY OF THE INVENTION

The goal of the present invention is to solve the above-mentioned and other disadvantages.

Thereto the present invention consists of a light valve meant to be used in a lighting device, comprising an array of light processing elements that are arranged in an outline, substantially corresponding to the overall contour of an image to be built.

An advantage of the present invention is that the use of additional lenses can be avoided, thereby rendering the lighting device relatively compact, light and cheap.

Another advantage is that the light valves according to the invention also allow avoiding an unwanted illumination of a zone at the edges of an image with an irregular contour, which is nearly impossible to achieve by using additional lenses.

### BRIEF DESCRIPTION OF THE DRAWINGS

In order to better explain the characteristics of the invention, the following embodiment of a light valve according to the invention is described as an example only without being limitative in any way, with reference to the accompanying drawings, wherein:
figure 1, schematically represents a lighting device containing a light valve according to the invention;
figure 2, on a larger scale, represents the part indicated by arrow F2 in figure 1;
figure 3, on a larger scale, represents the part indicated by arrow F3 in figure 1;

### DESCRIPTION OF THE PREFERRED EMBODIMENTS

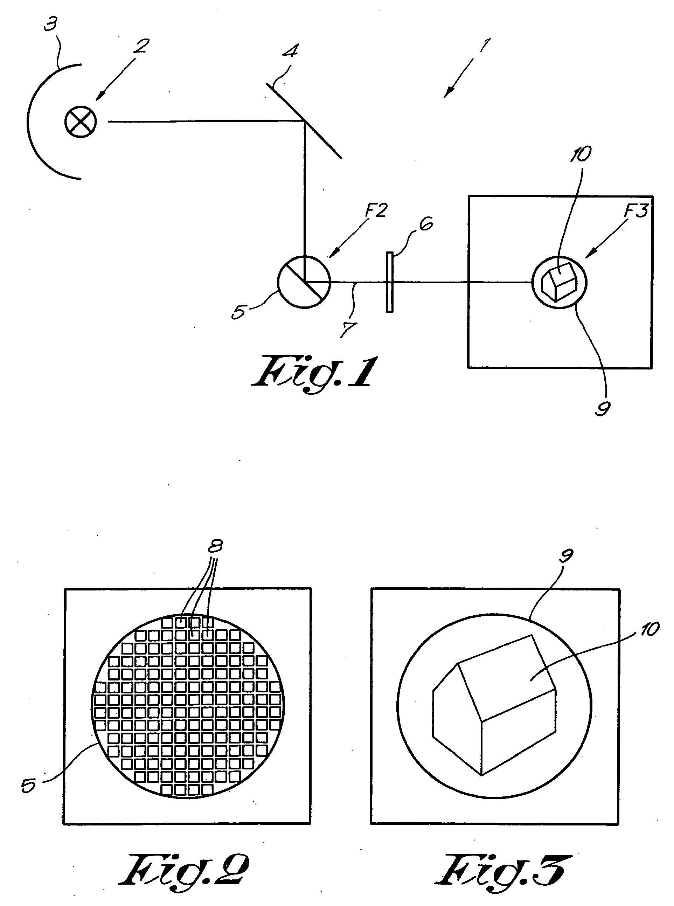

As represented in figure 1, a lighting device 1 generally consists of a light source 2 that is preferably provided by one or more reflectors 3, a mirror 4, a light valve 5 and a lens 6.

The light source 2 can be of any kind, but is preferably a light source 2 capable of producing a steady light emission, such as, for example, a low pressure metal halide lamp.

Said reflectors 3 and mirror 4, are meant to collimate the light emitted by the light source 2, in order to create a parallel light beam 7 directed to said light valve 5.

According to the present invention, the light valve 5 consists of an array of light processing elements 8 arranged in a non-rectangular outline, more specifically in an outline that substantially corresponds to the contour 9 of an image 10 to be built.

So, as represented in figures 2 and 3 the invention suggests to make use of, for example, a circular array of light processing elements 8 in the case the image 10 to be built has a basically circular contour.

Said light processing elements 8 can be micro mirrors, liquid crystals, or the like and can be of a light reflective or a light transmissive type.

It is clear that one lighting device 1 can be used to project several images or even moving images each having a different shape.

However, in that case it is likely that the images are generally circular or, for example triangular, in which case the most appropriate light valve 5 would be provided with a circular or triangular array of light processing elements 8.

The present invention is by no means limited to the above described embodiment given only as an example and represented in the accompanying drawings; on the contrary, such a light valve can be realized in all sorts of variants while still remaining within the scope of the present invention.

## Claims

1. A light valve meant to be used in a lighting device, comprising an array of light processing elements that are arranged in an outline substantially corresponding to the overall contour of an image to be built.

2. A light valve comprising an array of light processing elements that are arranged in a non-rectangular outline.

3. The light valve according to claim 2, comprising an array of light processing elements that is substantially circular.
